(19) Europäisches Patentamt
European Patent Office
Office européen des brevets

(11) **EP 2 670 032 A1**

(12) **EUROPEAN PATENT APPLICATION**

(43) Date of publication:
**04.12.2013 Bulletin 2013/49**

(51) Int Cl.:
**H02M 1/12** (2006.01)   **H02M 1/14** (2006.01)
**H02M 1/42** (2007.01)

(21) Application number: **13169499.4**

(22) Date of filing: **28.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.05.2012 KR 20120056633**

(71) Applicant: **LSIS Co., Ltd.**
**Dongan-gu, Anyang-si**
**Gyeonggi-do 431-080 (KR)**

(72) Inventors:
• **Lee, Jae Ho**
**420-841 Gyeonggi-do (KR)**
• **Park, Chan Gi**
**476-891 Gyeonggi-do (KR)**
• **Jin, Ho Sang**
**425-876 Gyeonggi-do (KR)**

(74) Representative: **Groth & Co. KB**
**P.O. Box 6107**
**102 32 Stockholm (SE)**

(54) **Power factor correction circuit**

(57) A power factor correction circuit (100) according to an exemplary embodiment of the present disclosure includes a parallel-connected electrolyte capacitor (160) and film capacitor (150), where ripple burden of the electrolyte capacitor is lessened to reduce the capacity of the capacitor and to increase its lifetime.

**FIG.2**

EP 2 670 032 A1

**Description**

**BACKGROUND OF THE INVENTION**

**Field of the invention**

The present disclosure relates to a power factor correction circuit.

**Description of Related Art**

This section provides background information related to the present disclosure which is not necessarily prior art.

In general, a power factor correction circuit controls an input current in response to an input voltage and a phase, such that an output power has a frequency twice an input frequency and a power ripple corresponding twice to an output power. For example, a power factor correction circuit with a 3.6kW output can have a ripple of 7.2kW at the maximum. Thus, in order to smooth this ripple, an output capacitor of a power factor correction circuit must have a considerably large value of capacitance. Hence, an electrolyte capacitor having a larger capacitance than its size is generally employed.

In determining an output capacitor of a power factor correction circuit, the two factors are taken into consideration, that is, one is a hold-up time for continuously supplying energy in a case an input voltage instantly drops to zero (0), and a life of an electrolyte capacitor. In case of a vehicular on-board charger, a restricting condition to a hold-up time is nil due to limitation of size and weight and therefore, design must be understandably put an emphasis in consideration of life of the electrolyte capacitor.

In general, factors affecting the life of an electrolyte capacitor include size of current ripple flowing into an electrolyte capacitor and a temperature at a center portion of the electrolyte capacitor, and these two factors are inter-related. Of course, if an ambient temperature increases, the temperature at the center portion of the electrolyte capacitor also increases to thereby shorten the life of the electrolyte capacitor, but if the ambient temperatures are same, the current ripple must be small to reduce an increased level of temperature at the center, whereby the shortened life can be saved.

However, no measures have existed for the power factor correction circuits so far developed capable of lengthening the life of the electrolyte capacitor by reducing the current ripples flowing into the electrolyte capacitor, and as a result, an overall size of the system tend to disadvantageously increase due to difficulty in reducing the size of the electrolyte capacitor.

**SUMMARY OF THE INVENTION**

Exemplary aspects of the present disclosure are to substantially solve at least the above problems and/or disadvantages and to provide at least the advantages as mentioned below. Thus, the present disclosure is directed to provide a power factor correction circuit configured to lengthen the life of an electrolyte capacitor while reducing the size of the capacity by reducing a ripple burden of the electrolyte capacitor.

The present disclosure is also directed to provide a power factor correction circuit configured to solve a problem of generating a cold start caused by increased internal impedance inside an electrolyte capacitor at a low temperature and reduction in allowable current ripples.

Technical problems to be solved by the present disclosure are not restricted to the above-mentioned descriptions, and any other technical problems not mentioned so far will be clearly appreciated from the following description by skilled in the art.

In one general aspect of the present invention, there is provided a power factor correction circuit, the circuit comprising: a power supply unit configured to supply power; a rectifier configured to rectify the power supplied from the power supply unit; and a power factor correction unit configured to correct a factor of the power rectified by the rectifier, wherein the power factor correction unit comprises a parallel-connected electrolyte capacitor and film capacitor.

In some exemplary embodiments, the film capacitor may be configured to remove a ripple of a harmonic current caused by a switching frequency, and the electrolyte capacitor is configured to remove a ripple of a current caused by a power frequency.

In some exemplary embodiments, the capacitance of the electrolyte capacitor may be greater than that of the film capacitor.

In some exemplary embodiments, the capacitance of the electrolyte capacitor may be 5 - 10 times greater than the capacitance of the film capacitor.

In some exemplary embodiments, the capacitance ($C_F$) of the film capacitor may be determined by the following equation.

$$\left|\frac{1}{j2\pi f_{SW}C_F}\right| \ll R_B$$

where, $R_B$ is a parasitic resistance and $f_{SW}$ is a switching frequency.

In some exemplary embodiments, the rectifier may include a plurality of diodes.

In some exemplary embodiments, the power factor correction unit may further comprise an inductor, a MOSFET (Metal Oxide Semiconductor Field-Effect Transistor) and a diode.

The power factor correction circuit according to exemplary embodiment of the present disclosure has an advantageous effect in that life can be lengthened by reducing a ripple burden of an electrolyte capacitor and by reducing capacity of the condenser, and a problem of generating a cold start caused by reduction in allowable current ripple and increased internal impedance of the electrolyte capacitor can be prevented in advance.

## BRIEF DESCRIPTION OF THE DRAWINGS

The teachings of the present disclosure can be readily understood by considering the following detailed description in conjunction with the accompanying drawings, in which:

FIGS.1a, 1b and 1c are schematic views illustrating a basic operation of a power factor correction circuit according to prior art;
FIG. 2 is a circuit diagram illustrating a configuration of a power factor correction circuit according to an exemplary embodiment of the present disclosure; and
FIGS.3 and 4 are schematic views illustrating an operation of a power factor correction circuit according to an exemplary embodiment of the present disclosure.

## DETAILED DESCRIPTION OF THE INVENTION

Various exemplary embodiments will be described more fully hereinafter with reference to the accompanying drawings, in which some exemplary embodiments are shown. The present inventive concept may, however, be embodied in many different forms and should not be construed as limited to the example embodiments set forth herein. Rather, the described aspect is intended to embrace all such alterations, modifications, and variations that fall within the scope and novel idea of the present disclosure.

Now, exemplary embodiments of the present disclosure will be explained in detail together with the figures.

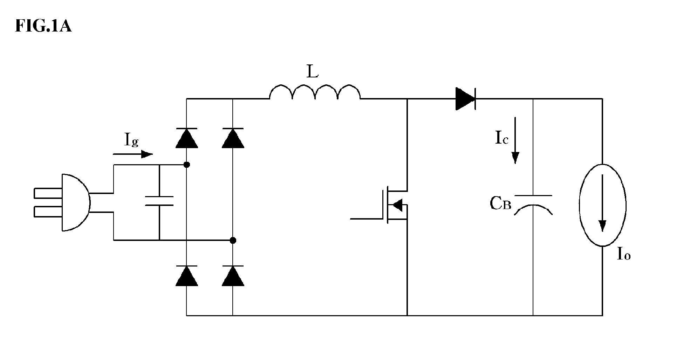

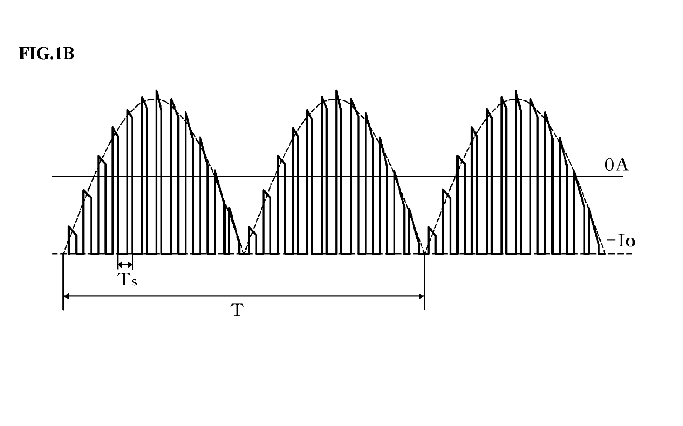

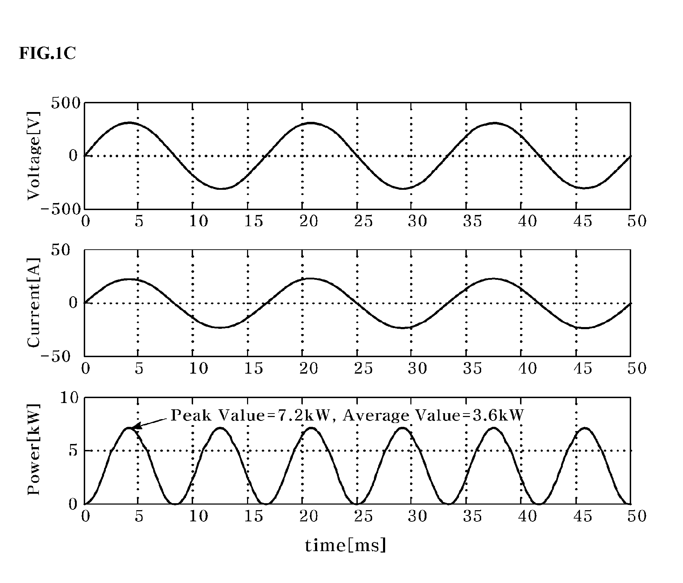

FIGS.1a, 1b and 1c are schematic views illustrating a basic operation of a power factor correction circuit according to prior art, where FIG.1a is a circuit diagram illustrating a configuration of a power factor correction circuit according to prior art.

Referring to FIG.1a, the power factor correction circuit is designed to stably supply a power using a capacitor (CB) by removing a ripple after rectification of a received power.

FIG.1b is schematic view illustrating a ripple current of a capacitor when a conventional power factor correction circuit is operated. Referring to FIG.1b, it can be noted that a low frequency (60Hz~120Hz) corresponding to twice an input frequency and a switching frequency switched by a boost power factor correction circuit are present.

FIG.1c is a schematic view sequentially illustrating, from top, an input voltage, an input current and an output power, in a case a conventional power factor correction circuit is properly controlled to operate normally. Referring to FIG.1c, the conventional power factor correction circuit is configured such that, because an input current is controlled to match a phase of an input voltage, an output power has a frequency twice an input frequency, and a power ripple corresponding to twice an output power. Thus, in order to smooth the ripple, an output capacitor of the power factor correction circuit must have a considerably greater value, such that an electrolyte capacitor having a great capacitance over a size is generally used. A capacitor (CB) of FIG.1a is the electrolyte capacitor.

If it is assumed that a power factor of an input current and a voltage is '1' and efficiency of a system is at or near '100%', an RMS (Root Mean Square) of the current may be obtained by the following equation in a case a current ripple of a capacitor flows as in FIG.1b.

**【Equation 1】**

$$I_C = \sqrt{\frac{8\sqrt{2}}{3\pi} I_g I_0 - I_0^2}$$

where, Ig is an RMS of an input current, and Io is an RMS of an output current. By using the above equation, if it is assumed that an input is 220V, an RMS of a ripple current of a capacitor in case of 3.6kW charger can be obtained as 9.79ARMS. In view of the result, it can be understood that an electrolyte capacitor having an allowable current ripple of more than at least 9.8ARMS must employed.

A current ripple IC,120Hz corresponding to a power frequency and a current ripple IC,SW corresponding to a switching frequency may have a result as in the following Equation 2.

**【Equation 2】**

$$I_c = \sqrt{I_{C,120Hz}^2 + I_{C,SW}^2}$$

A current ripple corresponding to a power frequency may be obtained by the following Equation 3.

**【Equation 3】**

$$I_{C,120Hz} = \sqrt{\frac{1}{T} \int_0^T I_C^2 dt} = \frac{I_o}{\sqrt{2}} = \frac{9}{\sqrt{2}} = 6.36 A_{R.M.S}$$

Hence, a current ripple corresponding to a switching frequency may be obtained by the following Equation 4.

**【Equation 4】**

$$I_{C,SW} = \sqrt{I_C^2 - I_{C,120Hz}^2} = \sqrt{9.79^2 - 6.36^2} = 7.44 A_{R.M.S}$$

where, in view of the fact that a frequency of an input power is very low compared to a switching frequency, and in consideration of a method of a current ripple corresponding to the switching frequency, capacitance of an electrolyte capacitor can be minimized by minimizing the current ripple of the electrolyte capacitor by the current ripple of power frequency.

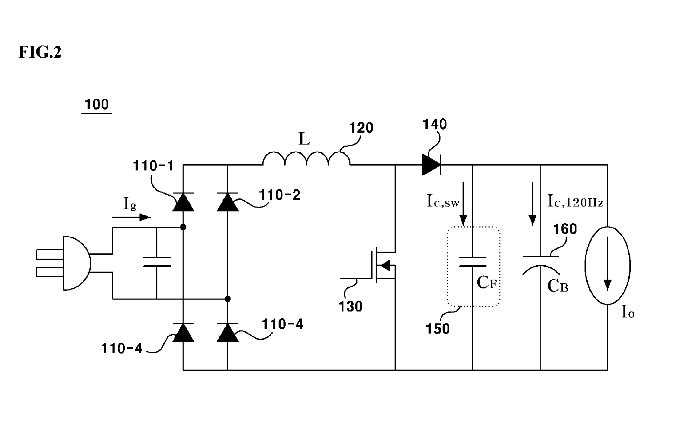

To this end, the power factor correction circuit according to an exemplary embodiment of the present disclosure may employ a film capacitor (150) along with an electrolyte capacitor (160) as shown in FIG. 2.

Referring to FIG. 2, a power factor correction circuit (100) according to an exemplary embodiment of the present disclosure may include a rectifier and a boost power factor correction unit, where the rectifier may include four diodes (110-1,110-2,110-3,110-4) to thereby rectify an inputted power.

Meantime, the boost power factor correction unit serves to correct a power factor of the rectified power, and includes an inductor (120), a MOSFET(Metal Oxide Silicon Field Effect Transistor, 130), a diode (140), an electrolyte capacitor (160) and a film capacitor (150), where the electrolyte capacitor (160) and the film capacitor (150) may be connected in parallel.

Furthermore, function of the boost power factor correction unit in an exemplary embodiment of the present disclosure may be performed by the MOSFET (130).

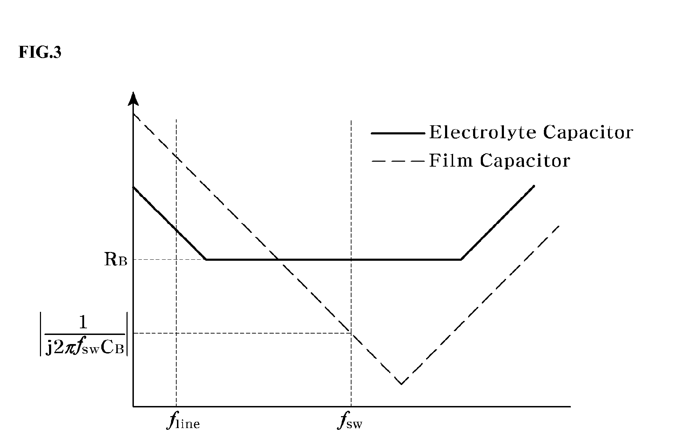

Each of the electrolyte capacitor (160) and the film capacitor (150) has a different frequency characteristic. Referring to FIG. 3, a frequency characteristic of the electrolyte capacitor in the frequency domain is illustrated in a full line. In general, a capacitor in a frequency domain has a characteristic of a capacitor at a low frequency band, and has a characteristic similar to a resistor at an intermediate frequency band, and has a characteristic similar to an inductor at a high frequency band. This is because the capacitor has no ideal characteristic but has therein a parasitic resistance and a parasitic inductance.

In general, an electrolyte capacitor has a great capacitance and a great internal parasitic resistance, and has an impedance characteristic similar to a resistor at a switching frequency band (scores of kHz~ hundreds of kHz), as in FIG. 3, which is caused by the parasitic resistance inside the electrolyte capacitor.

Meanwhile the film capacitor has therein a smaller parasitic resistance and has a characteristic as illustrated in a dotted line.

The power factor correction circuit (100) according to an exemplary embodiment of the present disclosure has the electrolyte capacitor (160) and the film capacitor (150) connected in parallel, such that a current ripple inputted into each capacitor is in reverse proportion to an impedance of ripple frequency. Thus, the ripple current flows into a capacitor having a smaller impedance.

Referring to FIG. 3, a current ripple having a power frequency flows toward the electrolyte capacitor, because the electrolyte capacitor (160) has smaller impedance in the power frequency. A current ripple having a switching frequency component flows to the film capacitor (150) because the film capacitor (150) has smaller impedance in the switching frequency.

By removing the switching current ripple at the electrolyte capacitor (160) using the abovementioned methods, the current ripple of the electrolyte capacitor (160) can be limited by the current ripple by the power frequency to thereby reduce the size of the electrolyte capacitor (160) and to prolong the life.

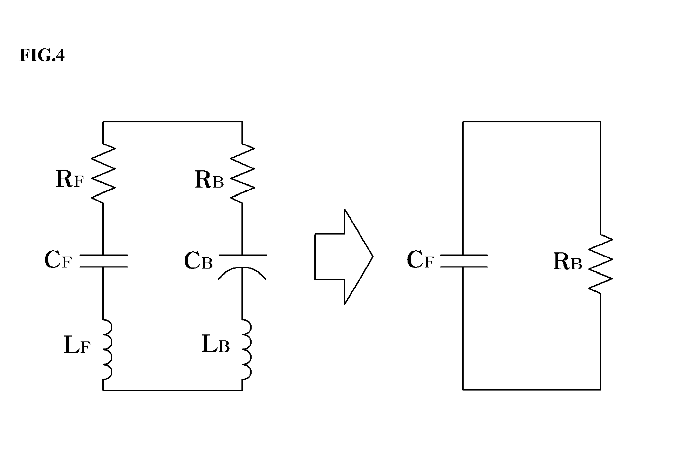

FIG. 4 is a schematic view illustrating an output end of a switching frequency, that is, an equivalent circuit of parallel-connected film capacitor (150) and electrolyte capacitor (160) according to an exemplary embodiment of the present disclosure, where a capacitance CF of the film capacitor (150) and a parasitic resistance RB of the electrolyte capacitor (160) are connected in parallel.

Thus, in order to allow the switching frequency ripple to flow toward the film capacitor (150), a capacitance of the film capacitor (150) must be determined to satisfy the following Equation 5.

## 【Equation 5】

$$\left| \frac{1}{j2\pi f_{SW} C_F} \right| \ll R_B$$

In general, it is appropriate that the capacitance of the electrolyte capacitor (160) may be 5 - 10 times greater than the capacitance of the film capacitor (150).

As noted from the foregoing, the film capacitor (150) that is connected to the electrolyte capacitor (160) in parallel absorbs a harmonic current ripple caused by the switching frequency. As a result, it is sufficient enough for the electrolyte capacitor (160) to be removed of a ripple caused by the power frequency, whereby a burden of current ripple of the electrolyte capacitor can be lessened.

This method can advantageously alleviate the problem of current ripple affecting a life of the electrolyte capacitor (160) to thereby lengthen a life of the electrolyte capacitor (160) that has a great influence on the life of a large capacity of power factor correction circuit including an on-board charger.

Furthermore, it is sufficient enough for the electrolyte capacitor (160) to be removed of the current ripple corresponding to the power frequency, whereby the capacitance can be advantageously reduced and an overall size of a product can be reduced.

Meantime, an internal impedance of an electrolyte capacitor in a power factor correction circuit generally increases at a low temperature range (-40°C - 0°C), and an allowable current ripple is generated at a cold start. However, this problem can be also solved by the above method.

The above-mentioned power factor correction circuit according to the exemplary embodiments of the present disclosure may, however, be embodied in many different forms and should not be construed as limited to the embodiment set forth herein. Thus, it is intended that embodiment of the present disclosure may cover the modifications and variations of this disclosure provided they come within the scope of the appended claims and their equivalents. While particular features or aspects may have been disclosed with respect to several embodiments, such features or aspects may be selectively combined with one or more other features and/or aspects of other embodiments as may be desired.

## Claims

1. A power factor correction circuit, the circuit comprising:

   a power supply unit configured to supply power;
   a rectifier configured to rectify the power supplied from the power supply unit; and
   a power factor correction unit configured to correct a factor of the power rectified by the rectifier, wherein the power factor correction unit comprises a parallel-connected electrolyte capacitor (160) and film capacitor (150).

2. The power factor correction circuit of claim 1, wherein the film capacitor (150) is configured to remove a ripple of a harmonic current caused by a switching frequency, and the electrolyte capacitor (160) is configured to remove a ripple of a current caused by a power frequency.

3. The power factor correction circuit of claim 1 or 2, wherein capacitance of the electrolyte capacitor (160) is greater than that of the film capacitor (150).

4. The power factor correction circuit of any one of claims 1 to 3, wherein the capacitance of the electrolyte capacitor (160) is 5 - 10 times greater than the capacitance of the film capacitor (150).

5. The power factor correction circuit of any one of claims 1 to 4, wherein the capacitance ($C_F$) of the film capacitor (150) is determined by the following equation.

$$\left| \frac{1}{j2\pi f_{SW} C_F} \right| \ll R_B$$

   where, $R_B$ is a parasitic resistance and $f_{SW}$ is a switching frequency.

6. The power factor correction circuit of any one of claims 1 to 5, wherein the rectifier includes a plurality of diodes (110-1, 110-2, 110-3 and 110-4).

7. The power factor correction circuit of any one of claims 1 to 6, wherein the power factor correction unit further comprises an inductor (120), a MOSFET (Metal Oxide Semiconductor Field-Effect Transistor) (130) and a diode (140).

**FIG.1A**

**FIG.1B**

**FIG.1C**

**FIG.2**

**FIG.3**

FIG.4

EP 2 670 032 A1

**EUROPEAN SEARCH REPORT**

Application Number

EP 13 16 9499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/043466 A1 (MITSUBISHI ELECTRIC CORP [JP]; IWABUKI HIROYASU [JP]; KURUSHIMA HIROSH) 5 April 2012 (2012-04-05) * paragraph [0021]; figures 1,4 * | 1-4,6,7 | INV. H02M1/12 H02M1/14 H02M1/42 |
| E | & US 2013/170265 A1 (IWABUKI HIROYASU [JP] ET AL) 4 July 2013 (2013-07-04) * paragraph [0026]; figures 1,4 * | 1-4,6,7 | |
| X | CN 201 029 219 Y (QIUNAN CHEN [CN]) 27 February 2008 (2008-02-27) * abstract; figures 1,3 * | 1-3,6 | |
| X | JP H10 321384 A (ASAHI NAT SHOMEI KK) 4 December 1998 (1998-12-04) * abstract; figure 1 * | 1-4,6 | |
| X | US 2011/292686 A1 (OKA SHOJI [JP] ET AL) 1 December 2011 (2011-12-01) * paragraph [0082]; figures 1,2A,11 * | 1-3 | |

TECHNICAL FIELDS SEARCHED (IPC)

H02M
H02J

The present search report has been drawn up for all claims

| Place of search | Date of completion of the search | Examiner |
|---|---|---|
| Munich | 18 September 2013 | Braccini, Roberto |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

**ANNEX TO THE EUROPEAN SEARCH REPORT
ON EUROPEAN PATENT APPLICATION NO.** EP 13 16 9499

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2013

| Patent document cited in search report | | Publication date | Patent family member(s) | | Publication date |
|---|---|---|---|---|---|
| WO 2012043466 | A1 | 05-04-2012 | DE 112011103261 T5<br>US 2013170265 A1<br>WO 2012043466 A1 | | 22-08-2013<br>04-07-2013<br>05-04-2012 |
| CN 201029219 | Y | 27-02-2008 | NONE | | |
| JP H10321384 | A | 04-12-1998 | NONE | | |
| US 2011292686 | A1 | 01-12-2011 | CN 102047550 A<br>US 2011292686 A1<br>WO 2009147985 A1 | | 04-05-2011<br>01-12-2011<br>10-12-2009 |

EPO FORM P0459

For more details about this annex : see Official Journal of the European Patent Office, No. 12/82